# EUROPÄISCHE PATENTSCHRIFT

(11) **EP 3 586 202 B1**
(45) Veröffentlichungstag und Bekanntmachung des Hinweises auf die Patenterteilung: **23.03.2022**
(21) Anmeldenummer: 18705918.3
(22) Anmeldetag: 16.02.2018
(51) Int. Cl.: G05B 19/042

(54) **E/A-MODUL ZUM EINSATZ IN EINEM AUTOMATISIERUNGSSYSTEM; EIN VERFAHREN ZUR KONFIGURATION UND/ODER PARAMETRIERUNG EINER STEUERUNGSEINRICHTUNG SOWIE EIN VERFAHREN ZUM ERSTELLEN EINES DIGITALEN VERDRAHTUNGSPROTOKOLLS FÜR EIN AUTOMATISIERUNGSSYSTEM**
I/O MODULE FOR USE IN AN AUTOMATION SYSTEM; A METHOD FOR CONFIGURATION AND/OR PARAMETERIZATION OF A CONTROL DEVICE AND A METHOD FOR CREATING A DIGITAL WIRING PROTOCOL FOR AN AUTOMATION SYSTEM
MODULE E/S À EMPLOYER DANS UN SYSTÈME D'AUTOMATISATION, PROCÉDÉ POUR CONFIGURER ET/OU PARAMÉTRER UN DISPOSITIF DE COMMANDE ET PROCÉDÉ POUR ÉTABLIR UN PROTOCOLE DE CÂBLAGE NUMÉRIQUE POUR UN SYSTÈME D'AUTOMATISATION

(30) Priorität: 21.02.2017 DE 102017103553
(43) Veröffentlichungstag der Anmeldung: 01.01.2020
(73) Patentinhaber: Phoenix Contact GmbH & Co. KG, 32825 Blomberg (DE)
(72) Erfinder: KLIMMEK, Benjamin, 31855 Aerzen (DE)
(74) Vertreter: Blumbach · Zinngrebe Patentanwälte PartG mbB
(86) Internationale Anmeldenummer: PCT/EP2018/053932
(87) Internationale Veröffentlichungsnummer: WO 2018/153793

(56) Entgegenhaltungen:
- EP-A1- 2 837 978
- DE-A1-102009 044 140

## Beschreibung

Die Erfindung betrifft ein E/A-Modul zum Einsatz insbesondere in einem industriellen Automatisierungssystem, ein Verfahren zur Konfiguration und/oder Parametrierung einer Steuerungseinrichtung eines Automatisierungssystems sowie ein Verfahren zum Erstellen eines digitalen Verdrahtungsprotokolls für ein Automatisierungssystem.

Die Verdrahtung, Parametrierung und Konfiguration von Automatisierungssystemen ist zeit- und arbeitsaufwendig. Häufig werden Komponenten der Automatisierungssysteme ausgetauscht oder hinzugefügt, so dass sich die Verdrahtung, die Konfiguration und Parametrierung ändert.

Aus der EP 3 012 698 A1 ist ein System und ein Verfahren zur drahtlosen Konfiguration und/oder Parametrierung von Kleinsteuergeräten bekannt. Einem Kleinsteuergerät ist eine eindeutige Gerätekennung zugeordnet, die in dem Kleinsteuergerät in einem Datenspeicher gespeichert und an dem Kleinsteuergerät optisch erfassbar aufgebracht ist. Die eindeutige Gerätekennung kann von einer Konfigurations- und/oder Parametrierungsvorrichtung optisch erfasst und in der Konfigurations- und/oder Parametrierungseinrichtung gespeicherten Konfigurations- und/oder Parametrierungsdaten zugeordnet werden, die zusammen mit der erfassten Gerätekennung drahtlos an das Kieinsteuergerät übertragen werden können.

Aus der DE 10 2009 044 140 A1 ist eine elektrische Steckverbindung mit einer drahtlos ansprechbaren Kodiervorrichtung bekannt.

Aus der EP 2 837 978 A1 ist ein E/A-Modul für eine modulare speicherprogrammierbare Steuerung bekannt. Das E/A-Modul weist als Anzeigeeinrichtung ein e-Paper-Display auf. Auf der Anzeigeeinrichtung kann eine Komponenten-, Schnittstellen- und/oder Geräte-Information als maschinenlesbarer Code ausgegeben werden.

Der Erfindung liegt die Aufgabe zugrunde, ein Verfahren zur Konfiguration und/oder Parametrierung einer Steuerungseinrichtung eines Automatisierungssystems sowie ein Verfahren zum Erstellen eines digitalen Verdrahtungsprotokolls für ein Automatisierungssystem zur Verfügung zu stellen, mit denen Konfigurations- und/oder Parametrierungsdaten schneller und einfacher erfasst und verfügbar gemacht werden können, um insbesondere die Komponenten eines Automatisierungssystems zuverlässiger verdrahten zu können.

Es ist ein E/A-Modul zum Einsatz in einem Automatisierungssystem vorgesehen, welches wenigstens eine Klemmstelle zum Anschließen einer Signalleitung und wenigstens einen Informationsträger aufweist, welcher eine Konfigurations- und/oder Parametrierungsinformation enthält. Der Informationsträger ist zum Auslesen und insbesondere zum drahtlosen Auslesen mittels einer mobilen und tragbaren Leseeinrichtung ausgebildet.

Um dem E/A-Modul in einfacher und flexibler Weise Konfigurations- und/oder Parametrierungsinformationen zuordnen zu können, weist das E/A-Modul ein Gehäuse auf, an dem der Informationsträger vorzugsweise lösbar befestigbar ist. Die Konfigurations- und/oder Parametrierungsinformation ist als optoelektronisch lesbarer Code auf dem Informationsträger aufgebracht und kann von einer einen optischen Sensor enthaltenen mobilen und tragbaren Leseeinrichtung ausgelesen werden. Vorzugsweise handelt es sich um einen Bar- oder QR-Code.

Alternativ kann der Informationsträger vorzugsweise als digitaler Speicher eines NFC-Chips ausgebildet sein, wobei die im Informationsträger gespeicherte Konfigurations- und/oder Parametrierungsinformation mittels einer mobilen und tragbaren NFC-fähigen Leseeinrichtung auslesbar ist. Erwähnt sei, dass das Akronym NFC für Near Field Communication steht.

Vorzugsweise weist das E/A-Modul mehrere Klemmstellen zum Anschließen jeweils einer Signalleitung auf, wobei jeder Klemmstelle ein Informationsträger zugeordnet ist, der entsprechende Konfigurations- und/oder Parametrierungsinformationen trägt.

Angemerkt sei an dieser Stelle, dass das E/A-Modul beispielsweise als Busklemme in Form einer Durchgangsklemme mit zwei Klemmstellen, eines Sensors oder eines Aktors ausgebildet sein kann.

Die Konfigurations- und/oder Parametrierungsinformation kann eine Adressierungsinformation des E/A-Moduls, und/oder eine Klemmstellen-Identifikationsinformation, wie zum Beispiel eine Klemmstellennummer, eine Kennzeichnung als Zielklemmstelle und/oder eine Kennzeichnung als Startklemmstelle, und/oder eine Funktionsangabe, und/oder ein Betriebsmittelkennzeichen, und/oder Informationen über eine an das E/A-Modul anzuschließende Signalleitung und/oder eine Information über eine Klemmstelle eines weiteren E/A-Moduls enthalten. Die eine anzuschließende Signalleitung beschreibende Information kann beispielsweise den Leitungstyp, die Leitungsfarbe, den Leitungsquerschnitt oder die Länge einer Leitung angeben.

Zweckmäßigerweise weist das E/A-Modul Befestigungsmittel zur Montage an einer Tragschiene insbesondere einer Hutschiene und/oder Befestigungsmittel zur Montage an einer an einer Tragschiene montierbaren Komponente auf.

Das oben genannte technische Problem wird durch die Verfahrensschritte des Anspruchs 1 gelöst.

Danach wird ein Verfahren zur Konfiguration und/oder Parametrierung einer Steuerungseinrichtung eines Automatisierungssystems zur Verfügung gestellt, welches wenigstens ein E/A-Modul aufweist, das über ein Übertragungsmedium, insbesondere einen Feldbus, mit der Steuerungseinrichtung kommunizieren kann. Das Verfahren weist folgende Schritte auf:
a) Auslesen mittels einer mobilen und tragbaren Leseeinrichtung der Konfigurations- und/oder Parametrierungsinformation aus wenigstens einem Informationsträger des wenigstens einen E/A-Moduls, wobei die aus dem wenigstens einen Informationsträger ausgelesene Konfigurations- und/oder Parametrierungsinformation eine Adressierungsinformation des E/A-Moduls enthält;
b) Einlesen der im Lesegerät gespeicherten Konfigurations- und/oder Parametrierungsinformationen in einen Speicher der Steuerungseinrichtung; und
c) Übertragen einer Adressierungsinformation von der Steuerungseinrichtung zu dem wenigstens einen E/A-Modul.

Gemäß einer vorteilhaften Weiterbildung wird in Schritt a) die Konfigurations- und/oder Parametrierungsinformation drahtlos aus wenigstens einem Informationsträger des wenigstens einen E/A-Moduls ausgelesen. In Schritt b) werden dann die im Lesegerät gespeicherten Konfigurations- und/oder Parametrierungsinformation drahtlos in den Speicher der Steuerungseinrichtung eingelesen.

Gewöhnlich sind mehrere E/A-Module in einem Automatisierungssystem implementiert. In diesem Fall zeichnet sich das erfindungsgemäße Verfahren durch eine hohe Effizienz aus, da die Konfigurations- und/oder Parametrierungsinformationen aller angeschlossenen E/A-Module einfach mittels des Lesegeräts eingelesen und dann in einem weiteren Schritt drahtlos in den Speicher der Steuerungseinrichtung eingelesen werden können.

Das oben genannte technische Problem wird ebenfalls durch die Verfahrensschritte des Anspruchs 3 gelöst.

Häufig werden neue E/A-Module in ein bestehendes Automatisierungssystem hinzugefügt oder ausgetauscht und neue Signalleitungen angeschlossen.

Um diese Maßnahmen einfach und schnell protokollieren zu können, wird ein Verfahren zum Erstellen eines digitalen Verdrahtungsprotokolls für ein Automatisierungssystem zur Verfügung gestellt, welches mehrere E/A-Module aufweist, die über ein Kommunikationsnetz mit einer Steuerungseinrichtung verbunden sind.

Unter Verwendung einer vorbestimmten Verdrahtungsliste wird vorbestimmten Klemmstellen der im Automatisierungssystem vorgesehenen E/A-Module jeweils ein Informationsträger zugeordnet, der als Konfigurations- und/oder Parametrierungsinformation eine erste Information, die das jeweilige E/A-Modul identifiziert, und/oder eine zweite Information, die eine vorbestimmte Klemmstelle des jeweiligen E/A-Moduls als Start- oder Zielklemmstelle einer Verdrahtung kennzeichnet, und/oder eine dritte Information enthält, die einer vorbestimmten Klemmstelle eines anderen E/A-Moduls als Ziel- beziehungsweise Startklemmstelle der jeweiligen Verdrahtung kennzeichnet. Mittels einer mobilen und tragbaren Leseeinrichtung werden die Konfigurations- und/oder Parametrierungsinformationen aus den Informationsträgern ausgelesen. In der Leseeinrichtung oder einer separaten Rechnereinrichtung wird aus den eingelesenen Konfigurations- und/oder Parametrierungsinformationen dann ein digitales Verdrahtungsprotokoll zur weiteren Verwendung erstellt.

Die Erfindung wird nachfolgend anhand einiger Ausführungsbeispiels in Verbindung mit den beiliegenden Zeichnungen näher erläutert. Es zeigen:
- Fig. 1: ein beispielhaftes Automatisierungssystem mit einer Steuerungseinrichtung und mehreren E/A-Modulen, in welcher die Erfindung verwirklicht wird,
- Fig. 2a und 2b: einen beispielhaften an einem E/A-Modul lösbar befestigbaren Informationsträger,
- Fig. 3a: eine beispielhafte tragbare und mobile Leseeinrichtung mit optischem Sensor,
- Fig. 3b: eine beispielhafte tragbare und mobile NFC-fähige Leseeinrichtung und
- Fig. 4: ein weiteres beispielhaftes Automatisierungssystem, in welchem die Erfindung verwirklicht wird.

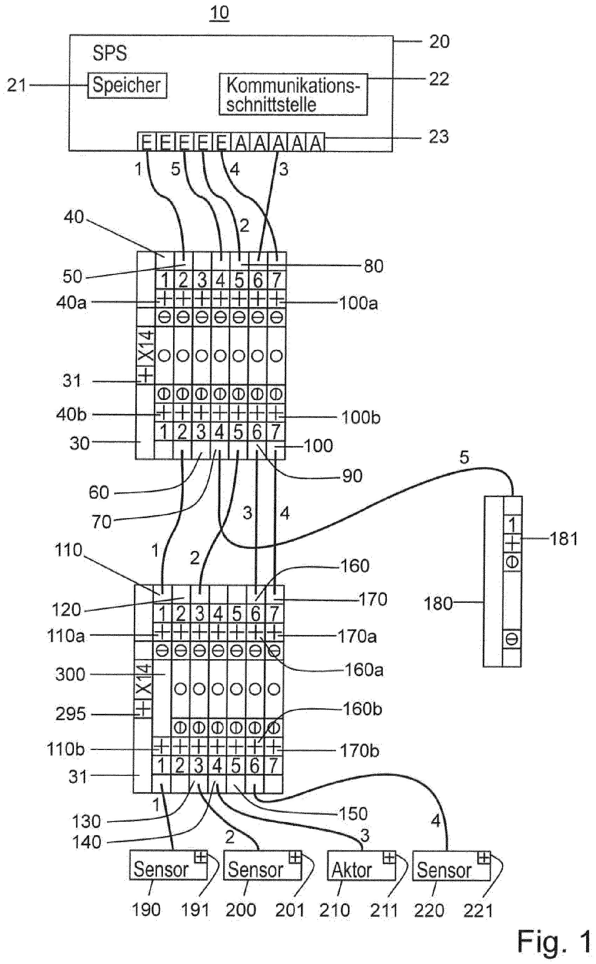

Figur 1 zeigt einen Ausschnitt eines beispielhaften Automatisierungssystems 10, welches eine Steuerungseinrichtung 20 aufweist, die als SPS, d.i. eine speicherprogrammierbare Steuerung, ausgebildet sein kann.

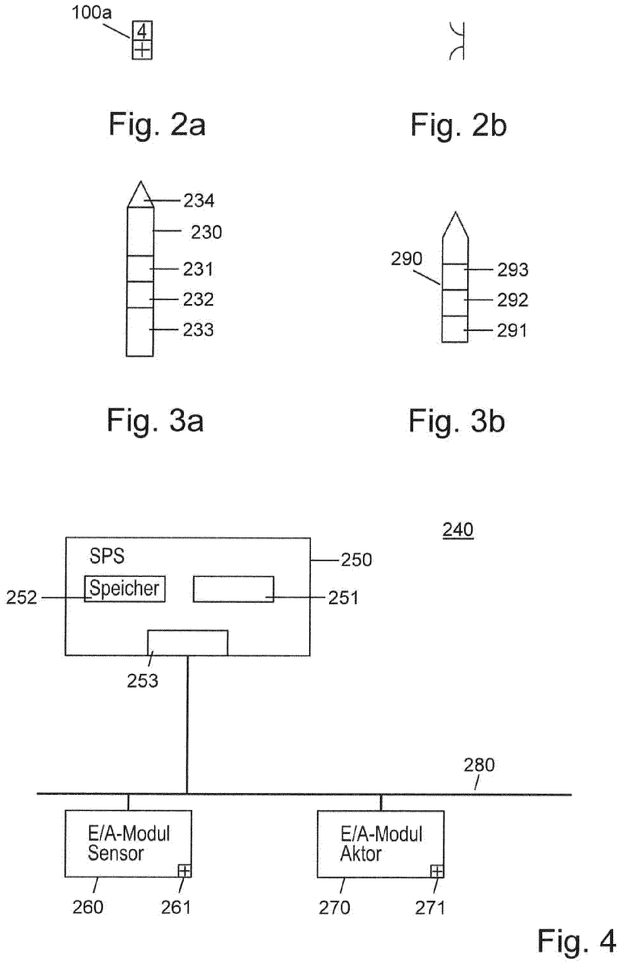

Die Steuerungseinrichtung 20 weist unter anderem eine Speichereinrichtung 21 auf, in der Konfigurations- und/oder Parametrierungsinformationen von E/A-Modulen gespeichert werden können. Ferner enthält die Steuerungseinrichtung 20 eine Kommunikationsschnittstelle 22, über die sie mit einer in Fig. 3a gezeigten tragbaren und mobilen Leseeinrichtung 230 kommunizieren kann. Die Kommunikationsschnittstelle 22 kann zum Beispiel eine NFC-fähige Schnittstelle, eine USB-Schnittstelle oder eine Bluetooth-Schnittstelle sein. In diesem Fall weist die Leseeinrichtung 230 ebenfalls beispielsweise eine NFC-fähige Schnittstelle, eine USB-Schnittstelle oder eine Bluetooth-Schnittstelle auf.

Angenommen sei, dass die Kommunikationsschnittstelle 22 eine NFC-fähige Kommunikationsschnittstelle sei, und die Leseeinrichtung 230 ebenfalls über eine NFC-fähige Kommunikationsschnittstelle 233 verfügt. Darüber hinaus verfügt die Steuerungseinrichtung 20 in an sich bekannter Weise über mehrere Ein- und Ausgabeschnittstellen 23 zum direkten oder indirekten Anschalten von Feldgeräten wie Sensoren und Aktoren auf.

Das Automatisierungssystem 10 weist, wie Figur 1 zeigt, beispielsweise eine Eingabe-/Ausgabebaugruppe 30 mit sieben E/A-Modulen 40 bis 100 auf, die als Durchgangsklemmen ausgebildet sind. Jedes E/A-Modul weist zwei Klemmstellen auf, denen jeweils ein Informationsträger zugeordnet ist. Die Klemmstellen sind jeweils mit 1, 2, 3, 4, 5, 6 beziehungsweise 7 gekennzeichnet. Jede Klemmstelle ist zum Anschließen einer Signalleitung vorgesehen. Lediglich der einfacheren Darstellung wegen sind in Fig. 1 lediglich die Informationsträger des E/A-Moduls 40 mit Bezugszeichen 40a und 40b sowie die Informationsträger des E/A-Moduls mit Bezugszeichen 100a und 100b versehen. Zusätzlich kann die Eingabe- /und Ausgabebaugruppe 30 mit einem Informationsträger 31 versehen sein, der beispielsweise eine Identifikationsinformation speichert.

Das Automatisierungssystem 10 kann, wie Figur 1 zeigt, beispielsweise eine weitere Eingabe-/Ausgabebaugruppe 31 mit sieben E/A-Modulen 110 bis 170 aufweisen, die wiederum als Durchgangsklemmen ausgebildet sind. Die Eingabe-/Ausgabebaugruppen 30 und 31 können an verschiedenen Tragschienen montiert sein, die in einem einzigen Schaltschrank oder in verschiedenen Schaltschränken angeordnet sein können. Jedes E/A-Modul weist zwei Klemmstellen auf, denen jeweils ein Informationsträger zugeordnet ist. Die Klemmstellen sind jeweils mit 1, 2, 3, 4, 5, 6 beziehungsweise 7 gekennzeichnet. Jede Klemmstelle ist zum Anschließen einer Signalleitung vorgesehen. Lediglich der einfacheren Darstellung wegen sind in Fig. 1 lediglich die Informationsträger des E/A-Moduls 110 mit Bezugszeichen 110a und 110b, die Informationsträger des E/A-Moduls 160 mit Bezugszeichen 160a und 160b sowie die Informationsträger des E/A-Moduls 170 mit Bezugszeichen 170a und 170b versehen. Zusätzlich kann die Eingabe- /und Ausgabebaugruppe 31 mit einem Informationsträger 295 versehen sein, der beispielsweise eine Identifikationsinformation speichert.

Jeder Informationsträger enthält eine Konfigurations- und/oder Parametrierungsinformation, die eine Adressierungsinformation des jeweiligen E/A-Moduls, und/oder eine Klemmstellen-Identifikationsinformation, und/oder eine Funktionsangabe, und/oder ein Betriebsmittelkennzeichen, und/oder Informationen über eine an das E/A-Modul anzuschließende Signalleitung und/oder Information über eine Klemmstelle eines weiteren E/A-Moduls enthalten kann. Eine Klemmstellen-Identifikationsinformation enthält beispielsweise die Nummer der Klemmstelle und gegebenenfalls eine Kennzeichnung der jeweiligen Klemmstelle als Zielklemmstelle oder als Startklemmstelle. Die Information hinsichtlich einer anzuschließenden Signalleitung kann den Leitungstyp, die Farbe der Leitung, den Leiterquerschnitt und/oder die Länge der anzuschließenden Signalleitung enthalten.

Bei den Informationsträgern 40a bis 100b und 110a bis 170b kann es sich beispielsweise um Informationsträger aus Kunststoff handeln, die lösbar an einem Gehäuse der jeweiligen E/A-Module 40 bis 100 und 110 bis 170 befestigt werden können. Die Figuren 2a und 2b zeigen beispielhaft den Informationsträger 100a mit angeformten Befestigungsmitteln zum lösbaren Befestigen an dem E/A-Modul 100. Der Informationsträger 100a kann beispielsweise eine Klemmstellenziffer 7 sowie einen optoelektronisch lesbaren Code, wie zum Beispiel einen Strich- oder einen QR-Code enthalten, der die Konfigurations- und/oder Parametrierungsinformation speichert.

Die an den E/A-Modulen 40 bis 100 und 110 bis 170 lösbar befestigbaren Informationsträger 40a bis 100b und 110a bis 170b können mittels der mobilen und tragbaren Leseeinrichtung 230 ausgelesen werden. Sofern, wie erwähnt, die Informationsträger beispielsweise einen Strich- oder QR-Code tragen, enthält die mobile und tragbare Leseeinrichtung 230 einen optischen Sensor 234 zum Auslesen der Informationsträger. Die ausgelesenen Informationen können in einem Speicher 231 abgelegt werden.

Anstatt den Klemmstelle der E/A-Module einen lösbar am Gehäuse befestigbaren Informationsträger zuzuordnen, kann jeder Klemmstelle ein Informationsträger zugeordnet werden, der als Speicher eines im jeweiligen E/A-Modul angeordneten NFC-Chip ausgebildet sein kann. In jedem NFC-Chip ist dann die Konfigurations- und/oder Parametrierungsinformation des jeweiligen E/A-Moduls beziehungsweise der jeweiligen Klemmstelle gespeichert. Die in jedem NFC-Chip gespeicherte Konfigurations- und/oder Parametrierungsinformation kann beispielsweise mittels der mobilen und tragbaren Leseeinrichtung 230 in den NFC-Chip eingelesen und/oder aus dem NFC-Chip ausgelesen werden. Das bedeutet, dass in einer Projektierungsphase die Konfigurations- und/oder Parametrisierungsinformationen aller E/A-Module bzw. aller Klemmstellen der E/A-Module beispielsweise von einem separaten Rechner in die Leseeinrichtung 230 geschrieben werden können.

Anstatt die Eingabe-/Ausgabebaugruppen 30 und 31 durch einzelne E/A-Module mit jeweils zwei Klemmstellen aufzubauen, ist es denkbar, jeweils ein E/A-Modul zu verwenden, welches beispielsweise jeweils sieben Klemmstellenpaare aufweist.

Die E/A-Module 40 bis 170 können Befestigungsmittel (nicht dargestellt) aufweisen, um an einer Tragschiene insbesondere einer Hutschiene montiert werden zu können. Zusätzlich oder alternativ können die E/A-Module Befestigungsmittel zur Montage an Komponenten, die an einer Tragschiene montiert sind, aufweisen.

Das Automatisierungssystem 10 weist ferner ein E/A-Modul 180 auf, welches eine einzige Klemmstelle 1 zum Anschließen einer Signalleitung aufweist. Das E/A-Modul 180 kann als Aktor oder Sensor ausgebildet sein. Im vorliegenden Beispiel sei angenommen, dass es sich bei dem E/A-Modul 180 um einen Sensor handelt. Der einzigen Klemmstelle des Sensors 180 ist ein Informationsträger 181 zugeordnet, der wiederum als lösbar befestigbarer Informationsträger ausgebildet sein kann, auf dem ein optoelektronisch lesbarer Code aufgebracht ist, der eine Konfigurations- und/oder Parametrierungsinformation codiert. Alternativ kann der Informationsträger 181 auch als Speicher eines NFC-Chips ausgebildet sein, in dem die Konfigurations- und/oder Parametrierungsinformation gespeichert ist.

Wie in Figur 1 gezeigt, können zum Beispiel drei Sensoren 190, 200 und 220 sowie ein Aktor 210 über die beiden Eingabe-/Ausgabebaugruppen 30 und 31 mit der Steuerungseinrichtung 20 verbunden werden. Präziser gesprochen ist der Sensor 190 über die Klemmstellen des E/A-Moduls 110 und die Klemmstellen des E/A-Moduls 50 mit einer ersten Eingangsschnittstelle der Steuerungseinrichtung 20 verbunden. Die entsprechenden Signalleitungen tragen die arabische Ziffer 1. In ähnlicher Weise ist der Sensor 200 über die Klemmstellen des E/A-Moduls 130 und den Klemmstellen des E/A-Moduls 80 mit einer weiteren Eingangsschnittstelle der Steuerungseinrichtung 20 verbunden. Die verwendeten Signalleitungen tragen die arabische Ziffer 2. Der Aktor 210 ist über Klemmstellen des E/A-Moduls 140 und den Klemmstellen des E/A-Moduls 90 mit einer Ausgangsschnittstelle der Steuerungseinrichtung 20 verbunden. Die entsprechenden Signalleitungen tragen die arabische Ziffer 3. Der Sensor 220 schließlich ist über Klemmstellen des E/A-Moduls 160 und Klemmstellen des E/A-Moduls 100 mit einer Eingangsschnittstelle der Steuerungseinrichtung 20 verbunden. Die gezeigten Signalleitungen tragen die arabische Ziffer 4. Das als Sensor ausgebildet E/A-Modul 180 ist über die Klemmstellen des E/A-Moduls 70 mit einer weiteren Eingangsschnittstelle der Steuerungseinrichtung 20 verbunden. Die entsprechenden Signalleitungen tragen die arabische Ziffer 5.

Angemerkt ist, dass die Sensoren 180, 190, 200 und 220 sowie der Aktor 210 jeweils einen Informationsträger 181, 191, 201, 221 beziehungsweise 211 aufweisen, in dem entsprechende Konfigurations- und/oder Parametrierungsinformationen enthalten sind. Wiederum sei angemerkt, dass es sich bei den Informationsträgern jeweils um einen lösbar am Gehäuse des jeweiligen Geräts befestigbaren Informationsträger handeln kann, der beispielsweise einen QR-Code enthält. Die Informationsträger 181, 191, 201, 211 und 221 enthalten beispielsweise als Konfigurations- und/oder Parametrierungsinformationen jeweils die Adresse der zugeordneten Sensoren 180, 190, 200 und 220 beziehungsweise des zugeordneten Aktors 210, und/oder ein Betriebsmittelkennzeichen und/oder eine Funktionsangabe des jeweiligen Sensors oder Aktors.

Mit Hilfe der in oder auf den Informationsträgern gespeicherten Konfigurations- und/oder Parametrierungsinformationen ist es beispielsweise möglich, in einfacher Weise ein digitales Verdrahtungsprotokoll zum Beispiel für das in Figur 1 beispielhaft dargestellte Automatisierungssystem 10 zu erstellen.

Angenommen sei, dass eine vorbestimmte Verdrahtungsliste existiert, gemäß der die Sensoren 180, 190, 200 und 220 sowie der Aktor 210 mit der Steuerungseinrichtung 20 verbunden werden sollen.

Demgemäß werden die Sensoren, der Aktor und die Klemmstellen der E/A-Module mit Informationsträgern bestückt, die als Konfigurations- und/oder Parametrierungsdaten eine erste Information, die das jeweilige E/A-Modul identifiziert, und/oder eine zweite Information, die eine vorbestimmte Klemmstelle des jeweiligen E/A-Moduls als Start- oder Zielklemmstelle einer Verdrahtung kennzeichnet, und/oder eine dritte Information enthält, die eine vorbestimmte Klemmstelle eines anderen E/A-Moduls als Ziel- bzw. Startklemmstelle der jeweiligen Verdrahtung kennzeichnet. Mit anderen Worten: Die jeweiligen Informationsträger werden vorab entsprechend der vorbestimmten Verdrahtungsliste programmiert bzw. codiert. Anschließend werden die Informationsträger von einer Bedienperson an den entsprechenden Klemmstellen der E/A-Module, Sensoren und Aktoren montiert.

Die Informationsinhalte, die gemäß der Verdrahtungsliste in den Informationsträgern gespeichert werden müssen, werden beispielhaft bezüglich der Verbindung 1 der vorbestimmten Verdrahtungsliste beschrieben. Analog enthält die Verdrahtungsliste Angaben über die Informationsinhalte für die Informationsträger der weiteren Verbindungen 2 bis 5.

Der Informationsträger 191 des Sensors 190 enthält beispielsweise einen QR-Code, der die Adresse des Sensors 190, ein Betriebsmittelkennzeichen und eine Identifikationsinformation enthalten kann, die die Zielklemmstelle bezeichnet, an die der Sensor 190 angeschlossen werden soll. Im vorliegenden Beispiel soll der Sensor 190 mit der Zielklemmstelle 1 des E/A-Moduls 110 verbunden werden. Darüber hinaus kann der Informationsträger 191 auch Informationen über die zu verwendete Signalleitung 1 - zum Beispiel Farbe, Länge und Querschnitt der Leitung - enthalten.

Der Informationsträger 110b des E/A-Moduls 110 enthält zum Beispiel Informationen darüber, dass an der Klemmstelle 1 des E/A-Moduls 110 der Sensor 190 angeschlossen werden soll. Der Informationsträger 110a, der der anderen Klemmstelle 1 des E/A-Moduls 110 zugeordnet ist, enthält beispielsweise einen QR-Code, der beispielsweise Informationen darüber enthält, dass die Klemmstelle 1 als Startklemmstelle fungiert und mit der Zielklemmstelle 2 des E/A-Moduls 50 über einen definierten Leitungstyp 1 verbunden werden soll. Der der Zielklemmstelle 2 des E/A-Moduls 50 zugeordnete Informationsträger enthält beispielsweise einen QR-Code, der Angaben darüber speichert, dass die Klemmstelle 2 eine Zielklemmstelle ist und mit der Startklemmstelle 1 des E/A-Moduls 110 zu verbinden ist. Ferner kann der Informationsträger Angaben über die zu verwendende Signalleitung enthalten. Der der anderen Klemmstelle 2 des E/A-Moduls 50 zugeordnete Informationsträger 50a kann Angaben über die Eingabeschnittstelle der Steuerungseinrichtung 20 enthalten, an die der Sensor 190 angeschlossen werden soll.

Angemerkt sei, dass jeder Informationsträger auch die Nummer der jeweiligen Klemmstelle speichern kann.

Nachdem die Informationsträger entsprechend codiert worden sind, werden an den entsprechenden Stellen der Sensoren 180, 190, 100, 220 und am Aktor 210 befestigt.

Anschließend werden die jeweiligen Informationsträger von der Leseeinrichtung 230 ausgelesen und die Sensoren und der Aktor über die Signalleitungen 1 bis 5 mit der Steuerungseinrichtung 20 verbunden.

Nachdem die Informationen der Informationsträger, die den Verbindungen 1 bis 5 zugeordnet sind, mittels der Leseeinrichtung 230 eingelesen worden sind, erstellt die Leseeinrichtung 230 aus den eingelesenen Konfigurations- und/oder Parametrierungsinformationen ein digitales Verdrahtungsprotokoll entsprechend der vorbestimmten Verdrahtungsliste. Hierzu ist in der Leseeinrichtung 230 ein entsprechendes Programm hinterlegt, welches von einem Mikrocontroller 232 der Leseeinrichtung 230 zur Erstellung des digitalen Protokolls ausgeführt werden kann. Denkbar ist auch, dass die eingelesenen und im Speicher 231 der Leseeinrichtung 230 gespeicherten Informationen über die Schnittstelle 233 einer separaten Rechnereinrichtung (nicht dargestellt) übergeben werden können, die dazu ausgebildet ist, aus dem empfangenen Datensatz, der die gespeicherten Informationen darstellt, ein digitales Verdrahtungsprotokoll zur weiteren Verwendung zu erstellen. Beispielsweise kann das digitale Verdrahtungsprotokoll visualisiert oder ausgedruckt werden. Denkbar ist auch, dass die Rechnereinrichtung Teil eines ECAD-Systems ist und dazu ausgebildet ist, den Datensatz zu verwenden, um ein grafisches Abbild des Automatisierungssystems 10 zu erzeugen.

Das digitale Verdrahtungsprotokoll enthält insbesondere Angaben darüber, welche Sensoren und Aktoren mit weichen Klemmstellen und welche Signalleitungen zwischen den jeweiligen Klemmstellen verdrahtet worden sind.

Nunmehr wird ein zweites beispielhaftes Automatisierungssystem 240 betrachtet, welches in Figur 4 dargestellt ist.

Das vorzugsweise industrielle Automatisierungssystem 240 weist eine Steuerungseinrichtung 250 auf, die als SPS ausgebildet sein kann. Angenommen sei, dass die SPS 250 über eine Feldbus-Schnittstelle 253 verfügt, über die sie an einen Feldbus 280 angeschlossen werden kann. Ferner weist die Steuerungseinrichtung 250 beispielsweise eine NFC-Schnittstelle 251 und einen Speicher 252 auf.

Der einfachen Darstellung wegen sind an dem Feldbus 280 nur zwei E/A-Module 260 und 270 angeschlossen, wobei das E/A-Modul 260 ein Sensor und das E/A-Modul 270 ein Aktor sein kann. Der Sensor 260 und der Aktor 270 verfügen ebenfalls über eine Feldbus-Kommunikationsschnittstelle, über die sie an dem Feldbus 280 angeschlossen sind. Der Sensor 260 enthält einen Informationsträger 261, während der Aktor 270 einen Informationsträger 271 enthält.

Angenommen sei diesmal, dass die Informationsträger keine aufsteckbaren mechanischen Informationsträger mit aufgebrachtem QR-Code sind. Stattdessen sind sie als Speicher von NFC-Chips ausgebildet. Der NFC-Informationsträger 261 speichert insbesondere die Adresse des Sensors 260 und gegebenenfalls eine entsprechende Funktionsangabe des Sensors und/oder eine Betriebsmittelkennzeichnung. In ähnlicher Weise enthält der NFC-Informationsträger 271 die Adresse des Aktors und gegebenenfalls eine Funktionsangabe des Aktors und/oder eine Betriebsmittelkennzeichnung.

Zur Konfiguration und/oder Parametrierung der Steuerungseinrichtung 250 wird beispielsweise eine tragbare und mobile Leseeinrichtung 290 verwendet, die eine NFC-fähige Kommunikationsschnittstelle 291 aufweist. Darüber hinaus kann die Leseeinrichtung 290 eine Speichereinrichtung 292 und einen Mikroprozessor 293 enthalten, wie dies beispielsweise in Figur 3b gezeigt ist.

Eine Bedienperson nimmt nunmehr die NFC-fähige Leseeinrichtung 290 und liest drahtlos die in den NFC-Informationsträgern 261 und 271 gespeicherten Konfigurations- und/oder Parametrierungsdaten aus. Anschließend begibt sich die Bedienperson zur Steuerungseinrichtung 250, wobei nunmehr die in der Leseeinrichtung 290 gespeicherten Informationen drahtlos in den Speicher 252 der Steuerungseinrichtung 250 geschrieben werden.

Die Steuerungseinrichtung 250 ist dazu ausgebildet, aus den im Speicher 252 abgelegten Konfigurations- und/oder Parametrierungsdaten die Adressen des Sensors 260 und des Aktors 270 auszulesen und anschließend unter anderem die eigene Adresse über den Feldbus 280 zum Sensor 260 und zum Aktor 270 zu übertragen.

Auf diese Weise kann die Steuerungseinrichtung schnell und in einfacher Weise konfiguriert und/oder parametriert werden, indem sie über die angeschlossenen E/A-Module und somit über den Aufbau des Automatisierungssystem 240 in Kenntnis gesetzt wird.

Eine Rekonfiguration und/oder Reparametrierung, die nach dem Hinzufügen oder Austauschen von E/A-Modulen erforderlich wird, kann auf diese Weise sehr leicht und fehlerfrei durchgeführt werden, indem einfach die Informationsträger der ausgetauschten oder neu hinzugekommenen E/A-Module ausgelesen und die ausgelesenen Informationen in den Speicher 252 der Steuerungseinrichtung 250 eingeschrieben werden. Damit wird insbesondere sichergestellt, dass jedes neu hinzugekommene E/A-Modul selbsttätig die Adresse der Steuerungseinrichtung 250 erhält.

## Patentansprüche

1. Verfahren zur Konfiguration und/oder Parametrierung einer Steuerungseinrichtung (250) eines Automatisierungssystems (240), welches wenigstens ein E/A-Modul (260, 270) aufweist, das über ein Übertragungsmedium (280) mit der Steuerungseinrichtung (250) kommunizieren kann, das wenigstens eine Klemmstelle (1) zum Anschließen einer Signalleitung (1; 280) und
wenigstens einen Informationsträger (110a, 110b; 261), welcher eine Konfigurations- und/oder Parametrierungsinformation enthält, aufweist, wobei der Informationsträger (110a, 110b; 261) zum Auslesen mittels einer mobilen und tragbaren Leseeinrichtung (230; 290) ausgebildet ist, wobei das Verfahren folgende Schritte aufweist:
a) Auslesen mittels einer mobilen und tragbaren Leseeinrichtung (290) der Konfigurations- und/oder Parametrierungsinformation aus dem wenigstens einen Informationsträger (261, 271) des wenigstens einen E/A-Moduls (260, 270), wobei die aus dem wenigstens einen Informationsträger (261, 271) ausgelesene Konfigurations- und/oder Parametrierungsinformation eine Adressierungsinformation des E/A-Moduls (260, 270) enthält;
b) Einlesen der im Lesegerät (290) gespeicherten Konfigurations- und/oder Parametrierungsinformationen in einen Speicher (252) der Steuerungseinrichtung (250); und
c) Übertragen einer Adressierungsinformation von der Steuerungseinrichtung (250) zu dem wenigstens einen E/A-Modul (260, 270).

2. Verfahren nach Anspruch 1,
**dadurch gekennzeichnet, dass**
in Schritt a) die Konfigurations- und/oder Parametrierungsinformation drahtlos aus wenigstens dem einen Informationsträger (261, 271) des wenigstens einen E/A-Moduls (260, 270) ausgelesen wird und dass in Schritt b) die im Lesegerät (290) gespeicherten Konfigurations- und/oder Parametrierungsinformationen drahtlos in den Speicher (252) der Steuerungseinrichtung (250) eingelesen werden.

3. Verfahren zum Erstellen eines digitalen Verdrahtungsprotokolls für ein Automatisierungssystem (10), welches mehrere E/A-Module (40-170; 180-220) aufweist, die über ein Übertragungsmedium (1-5) mit einer Steuerungseinrichtung (20) verbunden sind und jeweils wenigstens eine Klemmstelle (1) zum Anschließen einer Signalleitung (1; 280) und wenigstens einen Informationsträger (110a, 110b; 261), welcher eine Konfigurations- und/oder Parametrierungsinformation enthält, aufweisen, wobei der Informationsträger (110a, 110b; 261) zum Auslesen mittels einer mobilen und tragbaren Leseeinrichtung (230; 290) ausgebildet ist, wobei
a) unter Verwendung einer vorbestimmten Verdrahtungsliste vorbestimmten Klemmstellen (1-7) der im Automatisierungssystem (10) enthaltenen E/A-Module jeweils ein Informationsträger (40a-170b; 181, 191, 201, 211, 221) zugeordnet wird, der als Konfigurations- und /oder Parametrierungsinformation eine erste Information, die das jeweilige E/A-Modul identifiziert, und/oder eine zweite Information, die eine vorbestimmte Klemmstelle des jeweiligen E/A-Moduls als Start- oder Zielklemmstelle einer Verdrahtung kennzeichnet, und/oder eine dritte Information enthält, die eine vorbestimmte Klemmstelle eines anderen E/A-Moduls als Ziel- bzw. Startklemmstelle der jeweiligen Verdrahtung kennzeichnet; wobei
b) mittels einer mobilen und tragbaren Leseeinrichtung (230) die Konfigurations- und/oder Parametrierungsinformationen aus den Informationsträgern, welche in Schritt a) den vorbestimmten Klemmstellen zugeordnet worden sind, ausgelesen werden, und wobei
c) in der Leseeinrichtung oder in einer separaten Rechnereinrichtung aus den eingelesenen Konfigurations- und/oder Parametrierungsinformationen ein digitales Verdrahtungsprotokoll zur weiteren Verwendung erstellt wird.

## Claims

1. A method for configuration and/or parameterization of a control device (250) of an automation system (240) which comprises at least one I/O module (260, 270) which is able to communicate with the control device (250) via a transfer medium (280) and which comprises at least one terminal point (1) for connecting a signal line (1; 280); and
at least one information carrier (110a, 110b; 261) which contains configuration and/or parameterization information,
wherein the information carrier (110a, 110b; 261) is adapted for being read out by a mobile and portable reading device (230; 290);
wherein the method comprises the steps of:
a) reading out, by a mobile and portable reading device (290), the configuration and/or parameterization information from the at least one information carrier (261, 271) of the at least one I/O module (260, 270), wherein the configuration and/or parameterization information read out from the at least one information carrier (261, 271) contain addressing information of the I/O module (260, 270);
b) reading, into a memory (252) of the control device (250), the configuration and/or parameterization information stored in the reading device (290); and
c) transmitting addressing information from the control device (250) to the at least one I/O module (260, 270).

2. The method according to claim 1, **characterized in that**
in step a), the configuration and/or parameterization information is read out from the at least one information carrier (261, 271) of the at least one I/O module (260, 270) in a wireless manner; and that
in step b), the configuration and/or parameterization information stored in the reading device (290) is read into the memory (252) of the control device (250) in a wireless manner.

3. A method for creating a digital wiring protocol for an automation system (10) that comprises a plurality of I/O modules (40 - 170; 180 - 220) which are connected to a control device (20) via a transfer medium (1 - 5), and each of which has at least one terminal point (1) for connecting a signal line (1; 280) and at least one information carrier (110a, 110b; 261) which contains configuration and/or parameterization information, wherein the information carrier (110a, 110b; 261) is adapted to be read out by a mobile and portable reading device (230; 290); wherein
a) a respective information carrier (40a - 170b; 181, 191, 201, 211, 221) is assigned to predetermined terminal points (1- 7) of the I/O modules included in the automation system (10) using a predetermined wiring list, which information carrier contains, as configuration and/or parameterization information, a first item of information identifying the respective I/O module, and/or a second item of information indicating a predetermined terminal point of the respective I/O module as a start or destination terminal point of a wiring, and/or a third item of information indicating a predetermined terminal point of a further I/O module as a destination or start terminal point of the respective wiring; wherein
b) the configuration and/or parameterization information are read out from the information carriers which have been assigned to the predetermined terminal points in step a) using a mobile and portable reading device (230); and wherein
c) a digital wiring protocol for further use is created from the read configuration and/or parameterization information in the reading device or in a separate computer device.

## Revendications

1. Procédé de configuration et/ou de paramétrage d'un dispositif de commande (250) d'un système d'automatisation (240), lequel présente au moins un module E/S (260, 270) qui peut communiquer avec le dispositif de commande (250) via un support de transmission (280) qui présente au moins un point de serrage (1) pour raccorder une ligne de signal (1 ; 280), et au moins un vecteur d'information (110a, 110b ; 261), lequel contient une information de configuration et/ou de paramétrage, dans lequel le vecteur d'information (110a, 110b ; 261) est conçu à des fins de lecture au moyen d'un dispositif de lecture (230 ; 290) mobile et portatif, où le procédé présente les étapes suivantes consistant à :
a) lire l'information de configuration et/ou de paramétrage au moyen d'un dispositif de lecture (290) mobile et portatif à partir de l'au moins un vecteur d'information (261, 271) de l'au moins un module E/S (260, 270), où l'information de configuration et/ou de paramétrage lue à partir de l'au moins un vecteur d'information (261, 271) contient une information d'adressage du module E/S (260, 270) ;
b) saisir, dans une mémoire (252) du dispositif de commande (250), les informations de configuration et/ou de paramétrage mémorisées dans le dispositif de lecture (290) ; et
c) transmettre une information d'adressage depuis le dispositif de commande (250) vers l'au moins un module E/S (260, 270).

2. Procédé selon la revendication 1, **caractérisé en ce que**
à l'étape a), l'information de configuration et/ou de paramétrage est lue sans fil au moins à partir dudit un vecteur d'information (261, 271) de l'au moins un module E/S (260, 270) et **en ce que**
à l'étape b), les informations de configuration et/ou de paramétrage mémorisées dans le dispositif de lecture (290) sont saisies sans fil dans la mémoire (252) du dispositif de commande (250).

3. Procédé de création d'un protocole de câblage numérique pour un système d'automatisation (10), lequel présente plusieurs modules E/S (40-170 ; 180-220) qui sont reliés à un dispositif de commande (20) via un support de transmission (1-5) et présentent respectivement au moins un point de serrage (1) pour raccorder une ligne de signal (1 ; 280) et au moins un vecteur d'information (110a, 110b ; 261), lequel contient une information de configuration et/ou de paramétrage, où le vecteur d'information (110a, 110b ; 261) est conçu à des fins de lecture au moyen d'un dispositif de lecture (230 ; 290) mobile et portatif, où
a) en utilisant une liste de câblage prédéfinie, un vecteur d'information (40a-170b ; 181, 191, 201, 211, 221) est respectivement attribué à des points de serrage (1-7) prédéfinis des modules E/S contenus dans le système d'automatisation (10), lequel vecteur d'information contient, en tant qu'information de configuration et/ou de paramétrage, une première information qui identifie le module E/S respectif, et/ou une deuxième information qui marque un point de serrage prédéfini du module E/S respectif en tant que point de serrage de départ ou cible d'un câblage, et/ou une troisième information qui marque un point de serrage prédéfini d'un autre module E/S en tant que point de serrage cible ou de départ du câblage respectif ; où
b) au moyen d'un dispositif de lecture (230) mobile et portatif, les informations de configuration et/ou de paramétrage sont lues à partir des vecteurs d'information, lesquels ont été attribués à l'étape a) aux points de serrage prédéfinis, et où
c) dans le dispositif de lecture ou dans un dispositif de calcul séparé, un protocole de câblage est créé pour une utilisation ultérieure à partir des informations de configuration et/ou de paramétrage saisies.
